# FASCICULE DE BREVET EUROPEEN

(11) **EP 2 900 623 B1**
(45) Date de publication et mention de la délivrance du brevet: **06.09.2017**
(21) Numéro de dépôt: 13773298.8
(22) Date de dépôt: 13.09.2013
(51) Int. Cl.: C04B 35/628, C04B 35/80, C04B 35/565, C04B 35/571, C04B 35/583, C04B 35/584, C04B 41/00

(54) **PROCEDE DE FABRICATION D'UNE PIECE EN CMC**
VERFAHREN ZUR HERSTELLUNG EINES CMC BAUTEILS
METHOD FOR MANUFACTURING A CMC WORKPIECE

(30) Priorité: 27.09.2012 FR 1259139
(43) Date de publication de la demande: 05.08.2015
(73) Titulaire: Safran Ceramics, 33185 Le Haillan (FR)
(72) Inventeur: GOUJARD, Stéphane, F-33700 Merignac (FR); BOUILLON, Eric, F-33185 Le Haillan (FR); DELCAMP, Adrien, F-33700 Merignac (FR); BERTRAND, Sébastien, F-33480 Moulis En Medoc (FR)
(74) Mandataire: Desormiere, Pierre-Louis
(86) Numéro de dépôt international: PCT/FR2013/052110
(87) Numéro de publication internationale: WO 2014/049221

(56) Documents cités:
- WO-A1-98/23555
- WO-A2-99/21805
- LE GALLET S ET AL: "Microstructural and microtextural investigations of boron nitride deposited from BCl3-NH3-H2 gas mixtures", JOURNAL OF THE EUROPEAN CERAMIC SOCIETY, ELSEVIER SCIENCE PUBLISHERS, BARKING, ESSEX, GB, vol. 24, no. 1, 1 janvier 2004 (2004-01-01), pages 33-44, XP004452654, ISSN: 0955-2219, DOI: 10.1016/S0955-2219(03)00126-2 cité dans la demande

## Description

### Arrière-plan de l'invention

L'invention concerne la fabrication de pièces en matériau composite à matrice céramique, matériau ci-après désigné par CMC.

Un domaine d'application de l'invention est la fabrication de pièces structurales utilisées dans des parties chaudes de turbomachines, notamment de turbomoteurs aéronautiques, par exemple des pièces de turbines, d'arrière-corps ou de tuyères secondaires.

Plus particulièrement, l'invention vise la fabrication de pièces en CMC ayant un renfort fibreux en fibres formées quasi intégralement de carbure de silicium, c'est à dire contenant en outre moins de 1%at d'oxygène et des impuretés éventuelles à l'état de traces, fibres désignées ci-après par fibres SiC, avec une interphase en nitrure de bore (BN) interposée entre les fibres et la matrice.

Une telle pièce en CMC à renfort en fibres SiC peut être fabriquée par obtention d'une préforme fibreuse, formation d'un revêtement d'interphase BN sur les fibres de la préforme et densification de la préforme par une matrice céramique.

Une préforme fibreuse ayant une forme voisine de celle d'une pièce à fabriquer peut être obtenue par mise en forme d'une structure fibreuse par exemple réalisée par tissage de fils en fibres SiC.

Un revêtement d'interphase BN peut être formé par infiltration chimique en phase gazeuse ou CVI (« Chemical Vapor Infiltration »), la préforme étant maintenue dans une forme voulue au moyen d'un outillage ou conformateur.

Un tel procédé de fabrication d'une pièce en CMC est décrit dans le document WO 98/23555. Le revêtement d'interphase BN est formé par CVI sur les fibres SiC à partir d'une phase gazeuse réactionnelle comprenant du trichlorure de bore BCl₃, de l'ammoniac NH₃ et du gaz hydrogène H₂. Le processus CVI est réalisé à une température relativement basse de 700°C et sous une pression relativement faible de 1.3kPa, de manière à obtenir une interphase BN procurant une liaison relativement forte entre les fibres et le revêtement d'interphase. Une telle liaison forte permet de tirer profit des capacités de déformation élastique des fils en fibres SiC pour obtenir un CMC ayant une limite élevée de déformation élastique, donc une moindre susceptibilité à la fissuration sous charge.

Toutefois, un revêtement d'interphase BN obtenu dans les conditions ci-dessus est sensible à l'oxydation et à l'humidité, ce qui peut conduire à sa dégradation lorsqu'il vient à être exposé à un environnement oxydant ou corrosif, affectant les propriétés mécaniques du CMC.

Il est connu que la résistance à l'oxydation d'un dépôt de BN réalisé par CVI ou par dépôt chimique en phase gazeuse, ou CVD (« Chemical Vapor Deposition ») peut être améliorée en conférant un degré élevé de cristallisation au BN. Cela peut être obtenu en réalisant le dépôt par CVI ou CVD à température « élevée », typiquement supérieure à 1300°C, ou en soumettant un dépôt BN obtenu par CVI à basse température à un traitement thermique à une température plus élevée, typiquement supérieure à 1300°C.

Dans le cas d'un dépôt d'une interphase BN par CVI sur les fibres d'une préforme fibreuse, la réalisation du processus CVI à température élevée se traduit par un gradient d'épaisseur de l'interphase, gradient d'autant plus marqué que la préforme est épaisse. En effet, le dépôt BN se fait préférentiellement au voisinage de la surface externe de la préforme et l'appauvrissement rapide de la phase gazeuse réactionnelle au fur et à mesure de sa diffusion dans la porosité de la préforme se traduit par une épaisseur beaucoup plus faible au coeur de la préforme qu'au voisinage de sa surface externe.

Pour éviter un tel gradient d'épaisseur d'interphase, une première solution consiste à réaliser le dépôt d'interphase BN par CVI ou CVD à température élevée sur les fils en fibres SiC, avant réalisation de la préforme. Toutefois, l'épaisseur de l'interphase doit alors être faible afin de conserver une souplesse des fils suffisante pour subir des opérations textiles telles que le tissage et il existe un risque élevé d'endommagement d'une telle interphase de faible épaisseur lors de ces opérations textiles.

Une deuxième solution consiste à réaliser le dépôt d'interphase BN par CVI à « basse » température, comme dans WO 98/23555, et à effectuer un traitement thermique subséquent. Toutefois, comme expliqué dans la publication de S. Le Gallet et al intitulée « Microstrutural and microtextural investigations of boron nitride deposited from BCl₃-NH₃-H₂ gas mixtures (Journal of the European Ceramic Society 24 (2004) 33-44), l'accroissement du degré de cristallisation d'un dépôt BN par traitement thermique n'est possible que si celui-ci contient de l'oxygène, par exemple en ayant été exposé à une atmosphère oxydante avant le traitement thermique. Or, la présence d'oxygène dans une interphase BN d'un matériau CMC pose problème, en particulier en raison du risque de réaction avec la fibre SiC à température élevée, conduisant à une dégradation de la fibre et à la production d'espèces volatiles (notamment SiO) pouvant être indésirables.

### Objet et résumé de l'invention

La présente invention a pour objet de fabriquer des pièces en CMC à renfort en fibres SiC, avec une liaison forte fibres-matrice pour avoir des pièces présentant une limite de déformation élastique élevée mais sans présenter les inconvénients précités.

Ce but est atteint grâce à un procédé comprenant :
- la réalisation d'une préforme fibreuse à partir de fibres de carbure de silicium contenant moins de 1%at d'oxygène ;
- le dépôt sur les fibres de la préforme d'une interphase en nitrure de bore, le dépôt étant effectué par infiltration chimique en phase gazeuse avec une cinétique de dépôt inférieure à 0,3µm/h ;
- la réalisation d'un traitement thermique de stabilisation du nitrure de bore de l'interphase après dépôt de l'interphase, sans exposition préalable de celle-ci à une atmosphère oxydante et avant dépôt de couche de matrice sur l'interphase, le traitement thermique étant réalisé à une température supérieure à 1300°C et au moins égale à la température maximale rencontrée ensuite jusqu'à achèvement de la densification de la préforme par la matrice ; et
- ensuite, la densification de la préforme par une matrice céramique.

De façon surprenante, la déposante a constaté qu'un tel traitement thermique, même s'il ne conduit pas à une cristallisation accrue du BN, confère à l'interphase une plus grande résistance à l'oxydation en particulier en éliminant la présence de sites actifs sur lesquels de l'oxygène aurait été susceptible de se greffer. En outre, le traitement thermique permet l'élimination d'espèces volatiles qui, sinon, auraient été libérées lors de la densification de la préforme en raison de la température rencontrée et auraient pollué la matrice ou se seraient trouvées piégées au sein du CMC. De plus, un risque de réaction entre les fibres SiC et de l'oxygène présent dans l'interphase est éliminé.

Le dépôt de l'interphase en nitrure de bore peut être effectué avec une cinétique de dépôt inférieure à 0,1 µm/h pour limiter plus encore le risque d'un gradient d'épaisseur d'interphase significatif au sein de la préforme.

Selon un mode de mise en oeuvre du procédé, le dépôt de l'interphase en nitrure de bore est effectué à partir d'une phase gazeuse réactionnelle contenant du trichlorure de bore BCl₃, de l'ammoniac NH₃ et du gaz hydrogène H₂, à une température inférieure à 800°C et sous une pression inférieure à 5kPa.

Selon un autre mode de mise en oeuvre du procédé, le dépôt de l'interphase en nitrure de bore est effectué à partir d'une phase gazeuse réactionnelle contenant du tri-fluorure de bore BF₃, de l'ammoniac NH₃ et du gaz hydrogène H₂, à une température inférieure à 1050°C et sous une pression inférieure à 20kPa.

La durée du traitement thermique peut-être comprise entre 0,25h et 4h, de préférence entre 0,5h et 2h.

Selon un mode de réalisation, l'interphase en nitrure de bore est formée avec la préforme maintenue dans sa forme au moyen d'un outillage de conformation et, après traitement thermique, un dépôt d'au moins une couche céramique est réalisé sur l'interphase par infiltration chimique en phase gazeuse pour consolider la préforme maintenue dans l'outillage, la densification de la préforme étant ensuite poursuivie après retrait de la préforme consolidée hors de l'outillage.

La densification de la préforme peut être au moins en partie réalisée par :
- infiltration chimique en phase gazeuse, et/ou
- imprégnation de la préforme par polymère précurseur de céramique et pyrolyse, et/ou
- introduction de poudre de carbone et/ou céramique dans la préforme et infiltration par métal à l'état fondu à base de silicium.

### Brève description des dessins

D'autres particularités et avantages de l'invention ressortiront à la lecture de la description faite ci-après à titre indicatif amis non limitatif en référence aux dessins annexés sur lesquels :
- la figure 1 est un ordinogramme indiquant des étapes successives d'un mode de réalisation d'un procédé conforme à l'invention ; et
- la figure 2 est un ordinogramme indiquant des étapes successives d'un autre mode de réalisation d'un procédé conforme à l'invention.

### Description détaillée de modes de réalisation

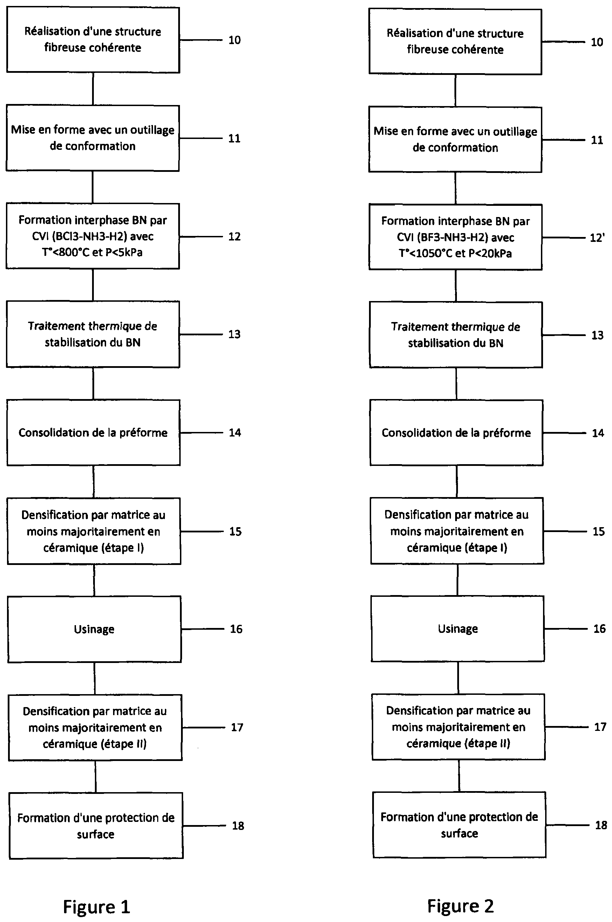

La figure 1 montre des étapes successives d'un mode de mise en oeuvre d'un procédé selon l'invention pour la fabrication d'une pièce en CMC.

A l'étape 10, une structure fibreuse cohérente est réalisée à partir de fils en fibres SiC telles que définies plus haut. On peut utiliser des fils fournis par la société japonaise Nippon Carbon sous la référence « Hi-Nicalon » ou, de préférence, sous la référence « Hi-Nicalon Type-S » ayant une limite d'allongement élastique élevée. Par « structure cohérente », on entend ici une structure éventuellement déformable capable de conserver sa cohésion sans assistance d'outillage de maintien ou équivalent. La structure fibreuse peut être réalisée par tissage, par exemple par tissage tridimensionnel ou multicouches. D'autres processus textiles peuvent être utilisés, par exemple le tressage ou le tricotage.

A l'étape 11, la structure fibreuse est mise en forme et maintenue dans sa forme au moyen d'un outillage de conformation, pour obtenir une préforme fibreuse ayant un forme voisine de celle de la pièce à fabriquer. Des exemples de mise en forme de préformes fibreuses à partir d'un structure fibreuse cohérente peuvent être trouvés notamment dans la demande de brevet US 2011/0293828.

A l'étape 12, une interphase BN est formée sur les fibres SiC par CVI, la préforme étant introduite, avec son outillage de conformation, dans un four CVI. De façon bien connue, on peut utiliser un outillage en graphite présentant des trous pour faciliter le passage de la phase gazeuse réactionnelle lors du processus CVI.

Les paramètres du processus CVI, notamment température et pression dans le four, et composition de la phase gazeuse réactionnelle précurseur de BN, sont choisis pour avoir une cinétique de dépôt limitée afin de favoriser la diffusion de la phase gazeuse au coeur de la préforme et éviter un gradient d'épaisseur de dépôt BN significatif dans l'épaisseur de la préforme. La cinétique de dépôt est choisie inférieure à 0,3µm/h (micromètres par heure), de préférence inférieure à 0,1µm/h.

La cinétique de dépôt, pour des paramètres donnés de processus CVI, peut être aisément déterminée par expérience, en mesurant l'épaisseur d'un dépôt formé sur la surface d'une pièce témoin, par exemple un bloc de SiC monolithique, en fonction de la durée de la phase de dépôt. Elle peut être aussi mesurée en faisant le rapport entre l'épaisseur de dépôt, mesurée par un examen en microscopie optique ou microscopie électronique à balayage sur une coupe transversale polie, et la durée de la phase de dépôt.

Dans le cas d'une phase gazeuse réactionnelle du type BCl₃-NH₃-H₂, la température est choisie de préférence inférieure à 800°C, par exemple comprise entre 650°C et 800°C et la pression est choisie inférieure à 5 kPa, par exemple comprise entre 0,2kPa et 5 kPa. Dans le cas d'une phase gazeuse du type BF₃-NH₃-H₂, la température est choisie de préférence inférieure à 1050°C, par exemple comprise entre 900°C et 1050°C et la pression est choisie inférieure à 20 kPa, par exemple comprise entre 2 kPa et 20 kPa.

L'épaisseur de l'interphase est en moyenne comprise entre 0,10µm et 1µm, par exemple entre 0,1µm et 0,3µm, étant noté que cette épaisseur peut varier notamment en fonction de l'emplacement par rapport aux trous de l'outillage de conformation. Le dépôt peut être formé par CVI continue, c'est-à-dire avec circulation continue de la phase gazeuse réactionnelle dans le four, ou par CVI pulsée en réalisant des cycles successifs comprenant chacun l'introduction de phase gazeuse réactionnelle dans le four, le maintien de celle-ci pendant une durée prédéterminée puis l'évacuation des gaz résiduels hors du four.

A l'étape 13, un traitement thermique de stabilisation du BN de l'interphase est réalisé sous atmosphère neutre, par exemple sous argon, sans exposition préalable de l'interphase BN à un environnement oxydant et avant formation d'une couche de matrice sur l'interphase BN. Le traitement thermique est avantageusement réalisé dans le four CVI, immédiatement après la fin du dépôt de l'interphase BN. L'objet du traitement thermique est de stabiliser chimiquement le BN en provoquant le dégazage d'espèces volatiles issues de la phase gazeuse réactionnelle et présentes dans le dépôt BN, et en éliminant la présence de sites actifs sur lesquels de l'oxygène pourrait se greffer si l'interphase venait à être exposée à un environnement oxydant lors de l'utilisation de la pièce en CMC.

La température du traitement thermique est choisie supérieure à 1300°C, par exemple comprise entre 1300°C et 1450°C. Cette température est en outre choisie au moins égale à la température maximale rencontrée ensuite jusqu'à la fin de la fabrication de la pièce en CMC, en particulier la température maximale rencontrée lors de la densification par la matrice. De la sorte, on évite un dégazage ultérieur éventuel d'espèces volatiles résiduelles hors du dépôt BN en raison d'une exposition à une température supérieure à celle du traitement thermique, de telles espèces volatiles pouvant alors être piégées dans le CMC notamment au niveau de l'interphase, ou pouvant polluer la matrice en cours de formation, et affectant par là-même les propriétés du CMC.

La durée du traitement thermique, c'est-à-dire le maintien à la température indiquée, est de préférence comprise entre 0,25h et 4h, de préférence encore entre 0,5h et 2h.

A l'étape 14, après traitement thermique, la préforme étant toujours maintenue dans l'outillage de conformation dans le four CVI, une couche de matrice céramique est formée par CVI sur l'interphase BN pour consolidation de la préforme, c'est-à-dire pour lier les fibres de la préforme suffisamment entre elles pour que la préforme puisse conserver sa forme sans l'assistance de l'outillage de conformation. Cette couche de matrice est par exemple en SiC. On notera que la formation d'une couche de matrice pour consolidation de la préforme peut ne pas être nécessaire si l'interphase BN suffit à la consolidation.

Après consolidation, la préforme consolidée peut être retirée de l'outillage de conformation (étape 15) pour être densifiée par une matrice au moins essentiellement en céramique. La densification peut être réalisée en deux étapes 16, 18 séparées par une étape 17 d'usinage de la pièce à la forme finale voulue. Les processus connus suivants de densification peuvent être utilisés :
- formation d'une matrice par CVI en une couche ou en plusieurs couches superposées,
- formation d'une matrice par voie liquide ou PIP (« Polymer Infiltration and Pyrolysis ») avec plusieurs cycles comprenant chacun une imprégnation par une composition liquide contenant au moins un précurseur de céramique et une pyrolyse,
- formation d'une matrice céramique par imprégnation par une barbotine contenant une ou plusieurs poudres de carbone ou céramique, par exemple SiC ou Si₃N₄, ou voie SC (« Slurry Casting ») puis séchage et infiltration par du silicium en fusion ou par un alliage en fusion contenant majoritairement du silicium, ou voie MI (« Melt Infiltration »).

La formation par CVI de couches de matrice céramique SiC, B₄C ou Si-B-C est décrite notamment dans les brevets US 5,246,756 et US 5,965,266.

Un précurseur de céramique pour densification par PIP peut être un composé organo-silicié tel qu'une résine polysilazane, polysiloxane, polycarbosilane ou silicone.

Un processus de densification par voie MI est décrit notamment dans les brevets US 4,889,686, US 4,994,904 et US 5,015,540. Dans ce cas, pour le choix de la température du traitement thermique, il faudra plus particulièrement prendre en compte le fait que le processus MI avec infiltration de silicium en fusion est réalisé à une température généralement d'au moins 1420°C, cette température pouvant être toutefois un peu inférieure avec un alliage à base de silicium.

Les deux étapes de densification pourront être réalisées par un même processus ou par des processus différents.

Enfin, à l'étape 19, la surface externe de la pièce ou une partie de cette surface peut être revêtue d'une couche de « peinture » céramique ou d'une barrière environnementale, ou EBC (« Environmental Barrier Coating ») ayant une fonction de protection thermique et/ou de protection contre la corrosion en environnement oxydant et/ou humide. On pourra notamment se référer aux demandes de brevets WO2010/063946, WO 2010/072978, US 2009/0169873 et US 2010/003504.

Le procédé de la figure 2 se distingue simplement de celui de la figure 1 en ce que l'étape 12' de formation de l'interphase BN par CVI est réalisée avec une phase gazeuse réactionnelle du type BF₃-NH₃-H₂, les autres étapes 10, 11 et 13 à 19 étant similaires à celles du procédé de la figure 1. Le processus CVI est conduit à une température de préférence inférieure à 1050°C, par exemple comprise entre 900°C et 1050°C et la pression est choisie inférieure à 20 kPa, par exemple comprise entre 2kPa et 20 kPa.

## Revendications

1. Procédé de fabrication d'une pièce en matériau composite à matrice céramique, le procédé comprenant :
- la réalisation d'une préforme fibreuse à partir de fibres de carbure de silicium contenant moins de 1%at d'oxygène ;
- le dépôt sur les fibres de la préforme d'une interphase en nitrure de bore, le dépôt étant effectué par infiltration chimique en phase gazeuse avec une cinétique de dépôt inférieure à 0,3µm/h ;
- la réalisation d'un traitement thermique de stabilisation du nitrure de bore de l'interphase, après dépôt de l'interphase, sans exposition préalable de celle-ci à une atmosphère oxydante et avant dépôt de couche de matrice sur l'interphase, le traitement thermique étant réalisé à une température supérieure à 1300°C et au moins égale à la température maximale rencontrée ensuite jusqu'à achèvement de la densification de la préforme par la matrice ; et
- ensuite, la densification de la préforme par une matrice céramique.

2. Procédé selon la revendication 1, **caractérisé en ce que** le dépôt de l'interphase en nitrure de bore est effectué avec une cinétique de dépôt inférieure à 0,1 µm/h.

3. Procédé selon l'une quelconque des revendications 1 et 2, **caractérisé en ce que** le dépôt de l'interphase en nitrure de bore est effectué à partir d'une phase gazeuse réactionnelle contenant du trichlorure de bore BCl₃, de l'ammoniac NH₃ et du gaz hydrogène H₂, à une température inférieure à 800°C et sous une pression inférieure à 5kPa.

4. Procédé selon l'une quelconque des revendications 1 et 2, **caractérisé en ce que** dépôt de l'interphase en nitrure de bore est effectué à partir d'une phase gazeuse réactionnelle contenant du tri-fluorure de bore BF₃, de l'ammoniac NH₃ et du gaz hydrogène H₂, à une température inférieure à 1050°C et sous une pression inférieure à 20kPa.

5. Procédé selon l'une quelconque des revendications 1 à 4, **caractérisé en ce que** la durée du traitement thermique est comprise entre 0,25h et 4h.

6. Procédé selon l'une quelconque des revendications 1 à 4, **caractérisé en ce que** la durée du traitement thermique est comprise entre 0,5h et 2h.

7. Procédé selon l'une quelconque des revendications 1 à 6, **caractérisé en ce que** l'interphase en nitrure de bore est formée avec la préforme maintenue dans un outillage de conformation et, après traitement thermique, un dépôt d'au moins une couche céramique est réalisé sur l'interphase par infiltration chimique en phase gazeuse pour consolider la préforme maintenue dans l'outillage, la densification de la préforme étant ensuite poursuivie après retrait de la préforme consolidée hors de l'outillage.

8. Procédé selon l'une quelconque des revendications 1 à 6, **caractérisé en ce que** la densification de la préforme est au moins en partie réalisée par infiltration chimique en phase gazeuse.

9. Procédé selon l'une quelconque des revendications 1 à 8, **caractérisé en ce que** la densification de la préforme est au moins en partie réalisée par imprégnation de la préforme par au moins un polymère précurseur de céramique et pyrolyse.

10. Procédé selon l'une quelconque des revendications 1 à 9, **caractérisé en ce que** la densification de la préforme est au moins en partie réalisée par introduction de poudre de carbone et/ou céramique dans la préforme et infiltration par métal à l'état fondu à base de silicium.

## Patentansprüche

1. Verfahren zur Herstellung eines Teils aus Keramikmatrix-Verbundwerkstoff, wobei das Verfahren umfasst:
- die Herstellung eines Faservorformlings aus Siliziumkarbidfasern, die wenigstens 1 At.-% Sauerstoff enthalten,
- das Abscheiden einer Zwischenphase aus Bornitrid auf den Fasern des Vorformlings, wobei das Abscheiden durch chemische Gasphaseninfiltration mit einer Abscheidungskinetik von weniger als 0,3 µm/h vollzogen wird,
- die Durchführung einer Wärmebehandlung zur Stabilisierung des Bornitrids der Zwischenphase, nach Abscheiden der Zwischenphase, ohne dass diese vorher einer oxidierenden Atmosphäre ausgesetzt wird und vor Abscheiden einer Matrixschicht auf der Zwischenphase, wobei die Wärmebehandlung bei einer Temperatur, die mehr als 1300 °C beträgt und wenigstens gleich der anschließend vorgefundenen maximalen Temperatur ist, bis zur Vollendung der Verdichtung des Vorformlings durch die Matrix durchgeführt wird, und
- anschließend die Verdichtung des Vorformlings durch eine Keramikmatrix.

2. Verfahren nach Anspruch 1, **dadurch gekennzeichnet, dass** das Abscheiden der Zwischenphase aus Bornitrid mit einer Abscheidungskinetik von weniger als 0,1 µm/h vollzogen wird.

3. Verfahren nach einem der Ansprüche 1 und 2, **dadurch gekennzeichnet, dass** das Abscheiden der Zwischenphase aus Bornitrid mittels einer reaktiven Gasphase, die Bortrichlorid BCl₃, Ammoniak NH₃ und Wasserstoffgas H₂ enthält, bei einer Temperatur von weniger als 800 °C und unter einem Druck von weniger als 5 kPa durchgeführt wird.

4. Verfahren nach einem der Ansprüche 1 und 2, **dadurch gekennzeichnet, dass** das Abscheiden der Zwischenphase aus Bornitrid mittels einer reaktiven Gasphase, die Bortrifluorid BF₃, Ammoniak NH₃ und Wasserstoffgas H₂ enthält, bei einer Temperatur von weniger als 1050 °C und unter einem Druck von weniger als 20 kPa durchgeführt wird.

5. Verfahren nach einem der Ansprüche 1 bis 4, **dadurch gekennzeichnet, dass** die Dauer der Wärmebehandlung zwischen 0,25 Std. und 4 Std. beträgt.

6. Verfahren nach einem der Ansprüche 1 bis 4, **dadurch gekennzeichnet, dass** die Dauer der Wärmebehandlung zwischen 0,5 Std. und 2 Std. beträgt.

7. Verfahren nach einem der Ansprüche 1 bis 6, **dadurch gekennzeichnet, dass** die Zwischenphase aus Bornitrid gebildet wird, während der Vorformling in einem Formungswerkzeug gehalten wird, und nach der Wärmebehandlung ein Abscheiden wenigstens einer Keramikschicht auf der Zwischenphase mittels chemischer Gasphaseninfiltration durchgeführt wird, um den in dem Werkzeug gehaltenen Vorformling zu verfestigen, wobei die Verdichtung des Vorformlings anschließend nach dem Herausnehmen des verfestigten Vorformlings aus dem Werkzeug fortgesetzt wird.

8. Verfahren nach einem der Ansprüche 1 bis 6, **dadurch gekennzeichnet, dass** die Verdichtung des Vorformlings wenigstens teilweise mittels chemischer Gasphaseninfiltration vollzogen wird.

9. Verfahren nach einem der Ansprüche 1 bis 8, **dadurch gekennzeichnet, dass** die Verdichtung des Vorformlings wenigstens teilweise durch Imprägnieren des Vorformlings mit wenigstens einem Keramikvorläuferpolymer und Pyrolyse vollzogen wird.

10. Verfahren nach einem der Ansprüche 1 bis 9, **dadurch gekennzeichnet, dass** die Verdichtung des Vorformlings wenigstens teilweise durch Einbringen von Kohlenstoff- und/oder Keramikpulver in den Vorformling und Infiltration durch Metall in geschmolzenem Zustand auf Siliziumbasis vollzogen wird.

## Claims

1. A method of fabricating a composite material part having a matrix that is made of ceramic, the method comprising:
• making a fiber preform from silicon carbide fibers containing less than 1 at% oxygen;
• depositing a boron nitride interphase on the fibers of the preform, deposition being performed by chemical vapor infiltration at a deposition rate of less than 0.3 µm/h;
• performing heat treatment to stabilize the boron nitride of the interphase, after the interphase has been deposited, without prior exposure of the interphase to an oxidizing atmosphere and before depositing matrix layer on the interphase, the heat treatment being performed at a temperature higher than 1300°C and not less than the maximum temperature to be encountered subsequently until the densification of the preform with the matrix has been completed; and
• thereafter, densifying the preform with a matrix that is made of ceramic.

2. A method according to claim 1, **characterized in that** the boron nitride interphase is deposited at a deposition rate of less than 0.1 µm/h.

3. A method according to claim 1 or claim 2, **characterized in that** the boron nitride interphase is deposited from a reaction gas mixture containing boron chloride BCl₃, ammonia NH₃, and gaseous hydrogen H₂, at a temperature of less than 800°C and at a pressure of less than 5 kPa.

4. A method according to claim 1 or claim 2, **characterized in that** the boron nitride interphase is deposited from a reaction gas mixture containing boron trifluoride BF₃, ammonia NH₃, and gaseous hydrogen H₂, at a temperature lower than 1050°C, and at a pressure less than 20 kPa.

5. A method according to any one of claims 1 to 4, **characterized in that** the duration of the heat treatment lies in the range 0.25 h to 4 h.

6. A method according to any one of claims 1 to 4, **characterized in that** the duration of the heat treatment lies in the range 0.5 h to 2 h.

7. A method according to any one of claims 1 to 6, **characterized in that** the boron nitride interphase is formed with the preform being held in shaping tooling, and after heat treatment, depositing at least one layer of ceramic on the interphase by chemical vapor infiltration in order to consolidate the preform held in the tooling, densification of the preform subsequently being continued after the consolidated preform has been extracted from the tooling.

8. A method according to any one of claims 1 to 6, **characterized in that** the preform is densified at least in part by chemical vapor infiltration.

9. A method according to any one of claims 1 to 8, **characterized in that** the preform is densified at least in part by impregnating the preform with at least one ceramic precursor polymer and by pyrolysis.

10. A method according to any one of claims 1 to 9, **characterized in that** the preform is densified at least in part by introducing carbon and/or ceramic powder into the preform and by infiltrating silicon-based metal in the molten state.
